(19) Europäisches Patentamt

European Patent Office

Office européen des brevets

(11) **EP 1 548 314 A2**

(12) **EUROPEAN PATENT APPLICATION**

(43) Date of publication:
**29.06.2005 Bulletin 2005/26**

(51) Int Cl.⁷: **F16D 48/08**

(21) Application number: **04029706.1**

(22) Date of filing: **15.12.2004**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **22.12.2003 JP 2003425273**

(71) Applicant: **JATCO Ltd
Fuji-shi, Shizuoka 417-8585 (JP)**

(72) Inventor: **Kim, Jonggap
Fuji-shi Shizuoka 417-8585 (JP)**

(74) Representative: **Grünecker, Kinkeldey,
Stockmair & Schwanhäusser Anwaltssozietät
Maximilianstrasse 58
80538 München (DE)**

(54) **Torque transmission control system and process**

(57) There is provided according to one aspect of the invention a system for controlling a torque transmission device that transmits an engine torque to a transmission in a vehicle. The system has a control unit configured to set a target engine speed according to an engine throttle opening, set an initial target transmitting torque according to the engine throttle opening, set a final target transmitting torque by the following exponential equation: $T = T_o \times \{f(Ne)\}^{g(V)}$ where T is the final target transmitting torque; $T_o$ is the initial target transmitting torque $T_o$; Ne is the engine speed; and V is the vehicle speed, and generate a signal to control a torque capacity of the torque transmission device in response to the final target transmitting torque.

# FIG.1

EP 1 548 314 A2

Printed by Jouve, 75001 PARIS (FR)

**Description**

BACKGROUND OF THE INVENTION

The present invention relates to a torque transmission system and process for controlling a torque transmission device that transmits an engine torque to a transmission in a vehicle.

Generally, a vehicle has a clutch to transmit an engine torque to a transmission. Various measures have been taken in the clutch so as to prevent the occurrence of vibrations due to torque fluctuations. For example, Japanese Laid-Open Patent Publication No. 63-305039 discloses a clutch control technique in which, at the time of vehicle starting, the final target clutch transmitting torque is set to a clutch slip value when the transmission ratio is lower than or equal to a given ratio and, at the same time, the engine speed is higher than or equal to a given speed so as to prevent the occurrence of vibrations due to torque fluctuations.

SUMMARY OF THE INVENTION

In the above-disclosed clutch control technique, however, there arises a possibility of failing to prevent engine stop and to maximize engine power due to the fact that the most suitable control condition varies from vehicle to vehicle. In addition, the engine speed drops back to cause a sudden acceleration decrease and thereby give a vehicle occupant an unpleasant feeling.

It is therefore an object of the present invention to provide a system and process for controlling a torque transmission device that transmits an engine torque to a transmission in a vehicle so as to maximize engine power and attain steady engine driving without a drop in engine speed at the time of vehicle starting or reacceleration.

According to a first aspect of the invention, there is provided a system for controlling a torque transmission device that transmits an engine torque to a transmission in a vehicle, the system comprising a control unit configured to: set a target engine speed according to an engine throttle opening; set an initial target transmitting torque according to the engine throttle opening; set a final target transmitting torque by the following exponential equation: $T = To \times \{f(Ne)\}^{g(V)}$ where T is the final target transmitting torque; To is the initial target transmitting torque To; Ne is the engine speed; and V is the vehicle speed; and generate a signal to control a torque capacity of the torque transmission device in response to the final target transmitting torque.

According to a second aspect of the invention, there is provided a system for controlling a torque transmission device that transmits an engine torque to a transmission in a vehicle, comprising: means for detecting an engine throttle opening, an engine speed and a vehicle speed; means for storing therein target engine speed characteristics and target transmitting torque characteristics; means for setting a target engine speed in accordance with the detected throttle opening with reference to the target engine speed characteristics; means for setting a target transmitting torque in accordance with the detected throttle opening with reference to the target transmitting torque characteristics; means for correcting the target transmitting torque based on the target engine speed, the detected engine speed and the detected vehicle speed; and means for generating a signal to control a torque capacity of the torque transmission device in response to the corrected target transmitting torque.

According to a third aspect of the invention, there is provided a process for controlling a torque transmission device that transmits an engine torque to a transmission in a vehicle, comprising: detecting an engine throttle opening, an engine speed and a vehicle speed; providing target engine speed characteristics and target transmitting torque characteristics; setting a target engine speed in accordance with the detected throttle opening with reference to the target engine speed characteristics; setting a target transmitting torque in accordance with the detected throttle opening with reference to the target transmitting torque characteristics; correcting the target transmitting torque based on the target engine speed, the detected engine speed and the detected vehicle speed; and generating a signal to control a torque capacity of the torque transmission device in response to the corrected target transmitting torque.

The other objects and features of the invention will also become understood from the following description.

BRIEF DESCRIPTION OF THE DRAWINGS

FIG. 1 is a schematic diagram of a torque transmission control system according to one exemplary embodiment of the invention.

FIG. 2 is a schematic diagram of a clutch control unit of the torque transmission control system according to one exemplary embodiment of the invention.

FIG. 3 is a graph showing a relationship between throttle opening TVO and target engine speed Neo according to one exemplary embodiment of the invention.

FIG. 4 is a graph showing a relationship between throttle opening TVO and initial target clutch transmitting torque To according to one exemplary embodiment of the invention.

FIG. 5 is a block diagram of a PID (Proportional Integral and Derivative) control block of the clutch control unit according to one exemplary embodiment of the invention.

FIG. 6 is a flowchart of a control operation process of the clutch control unit according to one exemplary embodiment of the invention.

FIG. 7 is a chart for determining a final target clutch transmitting torque T according to one exemplary embodiment of the invention.

FIG. 8 is a graph showing relationships between target engine speed Neo and target clutch transmitting torque To at various throttle openings TVO according to one exemplary embodiment of the invention.

FIGS. 9A-9E are graphs showing engine and clutch characteristics of the torque transmission control system according to one exemplary embodiment of the invention.

FIGS. 10A-10E are graphs showing engine and clutch characteristics of a torque transmission control system according to the earlier technology.

<u>DESCRIPTION OF THE EMBODIMENTS</u>

The present invention will be described below with reference to the drawings.

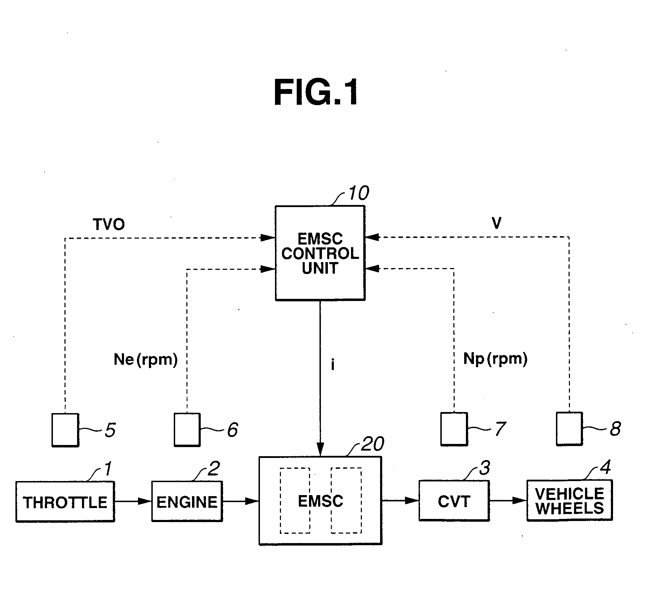

As shown in FIG. 1, a torque transmission control system for a vehicle according to one exemplary embodiment of the present invention includes a throttle 1, an engine 2, a continuously variable transmission (CVT) 3, vehicle wheels 4, an electromagnetic multiple disc clutch (EMSC) 20 as a torque transmission device and a EMSC control unit 10. Upon actuation of the throttle 1 by a driver's accelerator pedal operation, the engine 2 runs to produce an engine torque in accordance with the opening amount of the throttle 1. (Hereinafter, the opening amount of the throttle 1 is just referred to as "throttle opening TVO"). The EMSC 20 is disposed between an output shaft of the engine 2 and an input shaft of the CVT 3 to allow smooth and progressive engagement of the engine 2 with the CVT 3. The engine torque is transmitted to the CVT 3 through the EMSC 20. Although not shown in the drawings, the CVT 3 has a primary pulley mounted on the input shaft of CVT 3 and a secondary pulley mounted on an output shaft of the CVT 3 and drivingly connected with the primary pulley, and continuously varies its transmission ratio by adjusting the rotation speed ratio between the primary pulley and the secondary pulley. (The rotation speed of the primary pulley, which equals to the rotation speed of the CVT input shaft, is hereinafter just referred to as "primary pulley speed".) Then, the torque is outputted from the CVT 3 to the vehicle wheels 4. The torque transmission control system further has a vehicle condition detecting mechanism including a throttle opening sensor 5, an engine speed sensor 6, a pulley rotation speed sensor 7 and a vehicle speed sensor 8 to detect current actual values of the throttle opening TVO, the engine speed Ne, the primary pulley speed Np and the vehicle speed V, respectively, and output these detection values to the EMSC control unit 10 as shown in FIG. 1.

The EMSC control unit 10 generates a command to control the EMSC 20, i.e., to regulate the amount of electric current fed to the EMSC 20 and thereby adjust the torque capacity of the EMSC 20 based on the detected throttle opening TVO, engine speed Ne, primary pulley speed Np and vehicle speed V.

In the present embodiment, the EMSC control unit 10 combines two torque capacity control methods: one is to control the torque capacity by PID (Proportional Integral and Derivative) control; and the other is to control the torque capacity by the following torque capacity equation (1):

$$T = To \times \{f(Ne)\}^{g(V)} \qquad (1)$$

where T is the final target value of torque transmitted through the EMSC 20 (hereinafter referred to as "final target clutch torque"); To is the initial target value of torque transmitted through the EMSC 20 (hereinafter referred to as "initial target clutch torque"); and Ne is the actual engine speed. Preferably, $f(Ne)$ and $g(V)$ are given by the following equations (2) and (3):

$$f(Ne) = Ne/Neo \qquad (2);$$

and

$$g(V) = 2 - V/15 \qquad (3)$$

where Neo is the target engine speed Neo, so as to assign a weight to the engine speed ratio Ne/Neo in the torque correction term $\{f(Ne)\}^{g(V)}$ of the torque capacity equation (1).

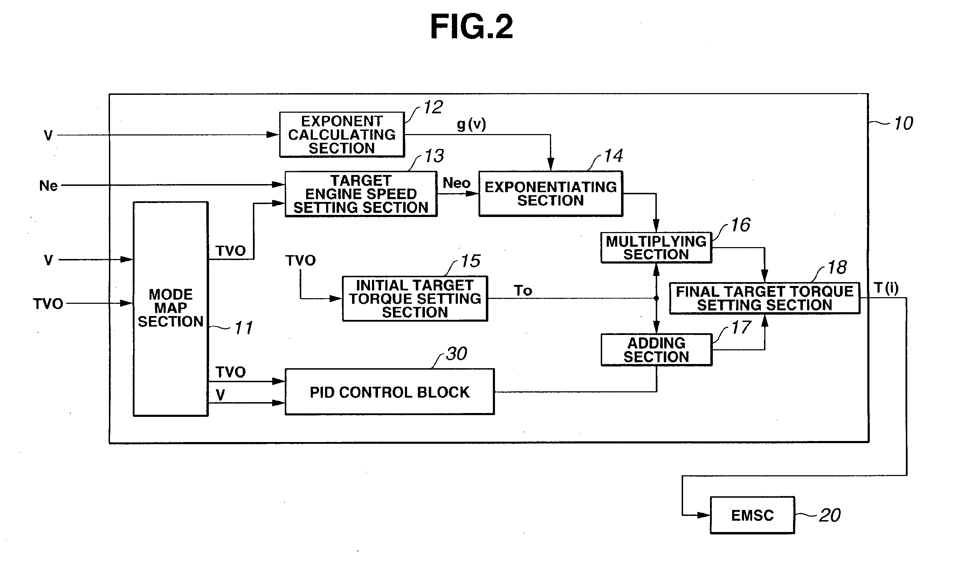

As shown in FIG. 2, the EMSC control unit 10 includes a mode map section 11, an exponent calculating section 12, a target engine speed setting section 13, an exponentiating section 14, an initial target torque setting section 15, a multiplying section 16, an adding section 17, a final target torque setting section 18 and a PID control block 30.

The mode map section 11 reads the detected throttle opening TVO and vehicle speed V from the sensors 5 and 8, and sends these detection values TVO and V to either the target engine speed setting section 13 or the PID control block 30 depending on the magnitudes of the detection values TVO and V. More specifically, the mode map section 11 sends both of the throttle opening value TVO and vehicle speed value V to the PID control block 30 upon judging that the detected throttle opening TVO is larger than or equal to 5/8 taking the full throttle opening as 1 or that the detected vehicle speed V is higher than or equal to 15 km/h. At all other times, the mode map section 11 sends only the throttle opening value TVO to the target engine speed setting section 13.

The exponent calculating section 12 calculates, based on the detected vehicle speed V, an exponent $g(V)$ for the torque correction term $\{f(Ne)\}^{g(V)}$ of the torque capacity equation (1), and then, outputs the calculated exponent $g(V)$ to the exponentiating section 14.

When the vehicle speed V is higher than or equal to 15 km/h, the exponent $g(V)$ becomes saturated to a constant value. The torque correction term $\{f(Ne)\}^{g(V)}$ is thus maximized at V = 15 km/h when Ne/Neo < 1 and minimized at V = 15 km/h when Ne/Neo > 1.

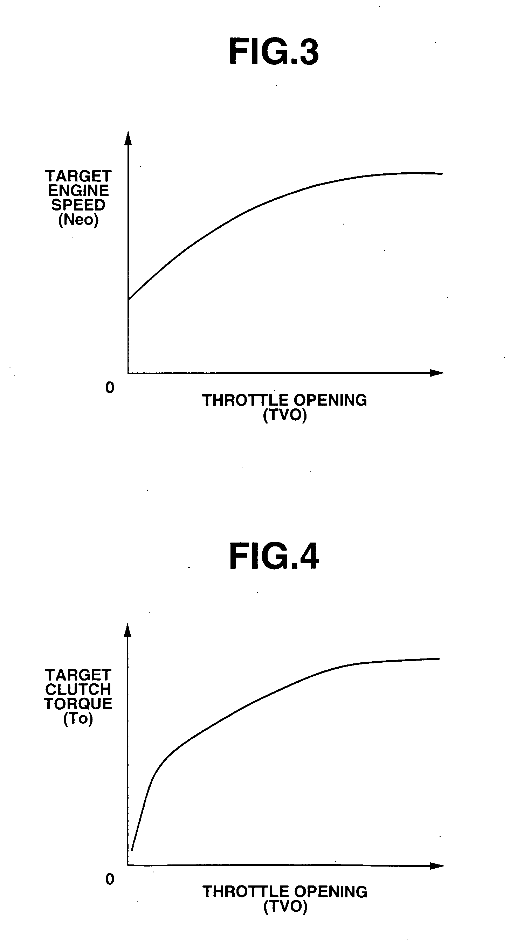

The target engine speed setting section 13 stores therein a map having characteristics of the target engine speed Neo with respect to the throttle opening TVO as shown in FIG. 3. Herein, the initial value of the target engine speed characteristics corresponds to an engine idle speed point in the map. At the time of TVO < 5/8 and V < 15 km/h, the target engine speed setting section 13 receives input about the detected throttle opening TVO from the mode map section 11, sets the target engine speed Neo in accordance with the detected throttle opening TVO with reference to the target engine speed characteristics map, and outputs the target engine speed Ne to the exponentiating section 14.

The exponentiating section 14 calculates the torque correction term $\{f(Ne)\}^{g(V)}$ of the torque capacity equation (1) from the exponent $g(V)$, the target engine speed Neo and the actual engine speed Ne, and outputs the calculated value of the torque correction term $\{f(Ne)\}^{g(V)}$ to the multiplying section 16.

The PID control block 30 stores therein maps having characteristics of the target engine speed Neo and target primary pulley speed Npo with respect to the throttle opening TVO. At the time of TVO ≥ 5/8 or V ≥ 15 km/h, the PID control block 30 receives input about the detected throttle opening TVO and vehicle speed V from the mode map section 11 and sets the target engine speed Neo and the target primary pulley speed Npo in accordance with the detected throttle opening TVO with reference to the target engine speed and primary pulley speed characteristics maps. Then, the PID control block 30 performs PID control based on the difference between the actual engine speed Ne and the target engine speed Neo and the difference between the actual primary pulley speed Np and the target primary pulley speed Npo to determine a PID control torque Tpid, and outputs the determined PID control torque Tpid to the adding section 17.

The initial target torque setting section 15 stores therein a map having characteristics of the initial target clutch torque To with respect to the throttle opening TVO as shown in FIG. 4. Herein, the initial value of the initial target clutch torque characteristics corresponds to an idle point. Upon receipt of input about the detected throttle opening TVO, the initial target torque setting section 15 sets the initial target clutch torque To in accordance with the detected throttle opening TVO with reference to the target clutch torque characteristics map and outputs the initial target clutch torque To to the multiplying section 16 and the adding section 17.

The multiplying section 16 multiplies the initial target clutch torque To by the torque correction term $\{f$

$(Ne)\}^{g(V)}$ according to the torque capacity equation (1) and outputs the multiplication result to the final target torque setting section 18.

The adding section 17 adds the initial target clutch torque To to the PID control torque Tpid as expressed by the following equation (4):

$$T = To + Tpid \qquad (4),$$

Then, the adding section 17 outputs the addition result to the final target torque setting section 18.

The final target torque setting section 18 determines as the final target clutch torque T either of the multiplication result of multiplying section 16 and the addition result of the adding section 17, and outputs a signal to regulate the supply of electric current (i) to the EMSC 20 and thereby control the torque capacity of the EMSC 20 in response to the final target clutch torque T.

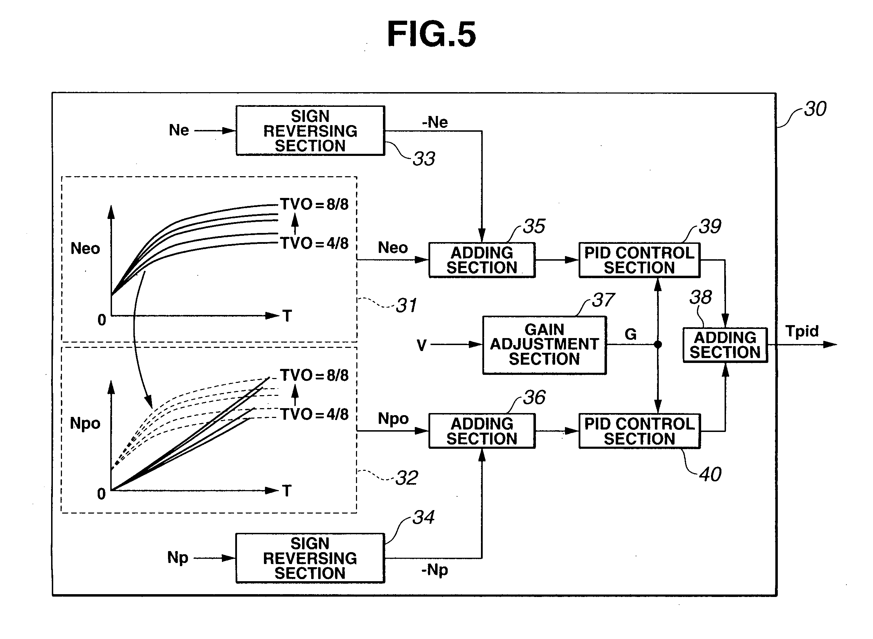

As shown in FIG. 5, the PID control block 30 includes a target engine speed characteristics storage section 31, a target pulley speed characteristics storage section 32, sign-reversing sections 33 and 34, adding sections 35 to 38, an engine-speed PID control section 39 and a pulley-speed PID control section 40.

The target engine speed characteristics storage section 31 stores the target engine speed characteristics map. In the map, the initial value of each target engine speed characteristic curve corresponds to an engine idle point. Upon receipt of the input about the detected throttle opening TVO from the mode map section 11, the target engine speed characteristics storage section 31 sets the target engine speed Neo in accordance with the detected throttle opening TVO with reference to the target engine speed characteristics map and outputs the target engine speed Neo to the adding section 35.

The sign-reversing section 33 reverses the sign of the current engine speed Ne and outputs the inverse -Ne of the engine speed to the adding section 35.

The adding section 35 adds the target engine speed Neo to the engine speed additive inverse -Ne, and outputs the addition result (Neo-Ne) to the engine-speed PID control section 39.

Similarly, the target pulley speed characteristics storage section 32 stores therein the target primary pulley speed characteristics map. In the map, the initial value of each target primary pulley speed characteristic line corresponds to an engine idle point (herein taken as 0). Upon receipt of the input about the detected throttle opening TVO from the mode map section 11, the target pulley speed characteristics storage section 32 sets the target primary pulley speed Npo in accordance with the detected throttle opening TVO with reference to the target primary pulley speed characteristics map and outputs the target primary pulley speed Npo to the adding section 36.

The sign-reversing section 34 reverses the sign of the current primary pulley speed Np and outputs the inverse -Np of the primary pulley speed to the adding section 36.

The adding section 36 adds the target primary pulley speed Npo to the primary pulley speed additive inverse -Np and outputs the addition result (Npo-Np) to the pulley-speed PID control section 40.

The gain adjustment section 37 receives input about the detected vehicle speed V from the mode map section 11 and adjusts gain factors G for the PID control in the PID control sections 39 and 40 so as to assign a greater weight to either the target engine speed Neo or the target primary pulley speed Npo depending on the magnitude of the detected vehicle speed V.

The engine-speed PID control section 39 performs PID control based on the value (Neo-Ne) with the adjusted gain factors G to give an engine-speed PID control torque Tepid, and then, outputs the torque Tepid to the adding section 38.

The pulley-speed PID control section 40 performs PID control based on the value (Npo-Np) with the adjusted gain factors G to give a pulley-speed PID control torque Tppid, and then, outputs the torque Tppid to the adding section 38.

The adding section 38 adds the torque Tepid to the torque Pppid to determine the PID control torque Tpid as expressed by the following equation (5):

$$Tpid = Tepid + Tppid \qquad (5).$$

The control operation process of the EMSC control unit 10 will be explained below in more detail.

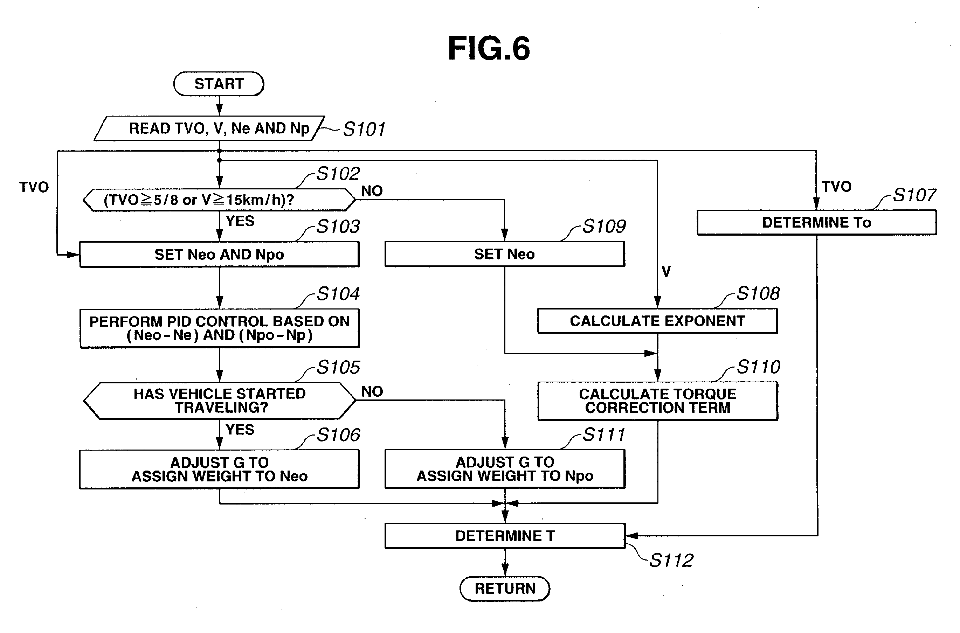

The EMSC control unit 10 performs the following steps during the control operation process as shown in FIG. 6. It should be noted that the EMSC control unit 10 reads the detected current actual values of the throttle opening TVO, vehicle speed V, engine speed Ne and primary pulley speed Np from the respective sensors 5 to 8 at the start of the engine 2 irrespective of the magnitudes of the throttle opening TVO and the vehicle speed V, and then, sets the target engine speed Neo, target primary pulley speed Npo, initial target clutch torque To and torque capacity equation (1) based on these detection values TVO, V, Ne and Np.

First, the detection values of the throttle opening TVO, engine speed Ne, primary pulley rotation speed Np and vehicle speed V are read into the EMSC control unit 10 in step S101.

In step S102, the mode map section 11 judges whether the condition of TVO ≥ 5/8 or V ≥ 15 km/h is satisfied. If YES in step S102, the mode map section 11 sends both of the detected throttle opening TVO and vehicle speed V to the PID control block 30, and then, the process goes to step S103. If NO in step S102, the mode map section 11 sends only the detected throttle opening TVO to the target engine speed setting section 13, and then, the process goes to step S109.

Upon receipt of the input from the mode map section 11, the target engine speed and pulley speed characteristics storage sections 31 and 32 set in step S103 the target engine speed Neo and primary pulley speed Npo, respectively, in accordance with the detected throttle opening TVO.

In step S104, the PID control sections 39 and 40 start performing PID control based on the values (Neo-Ne) and (Npo-Np), respectively.

In step S105, the gain adjustment section 37 judges whether the vehicle has starting traveling or not. If YES in step S105, the process goes to step S106. If NO in step S105, the process goes to step S111.

In step S106, the gain adjustment section 37 adjusts the PID gain factors G so as to assign a weight on the target engine speed Neo such that the torque transmission control becomes more responsive to the rotations of the engine 2

On the other hand, the gain adjustment section 37 adjusts the PID gain factors G so as to assign a weight to the target primary pulley speed Npo such that the torque transmission control becomes more responsive to the rotations of the primary pulley of the CVT 3 in step S111.

Further, the initial target torque setting section 15 sets the initial target clutch torque To in accordance with the detected throttle opening TVO in step S107.

In step S108, the exponent calculating section 12 calculates the exponent *g(V)* for the torque capacity equation (1).

Upon receipt of the input from the mode map section 11, the target engine speed setting section 13 sets in step S109 the target engine speed To in accordance with the detected throttle opening TVO.

In step S110, the exponentiating section 14 gives the torque correction term $\{f(Ne)\}^{g(V)}$ of the torque capacity equation (1).

In step S112, the final target torque setting section 18 sets the final target clutch torque T.

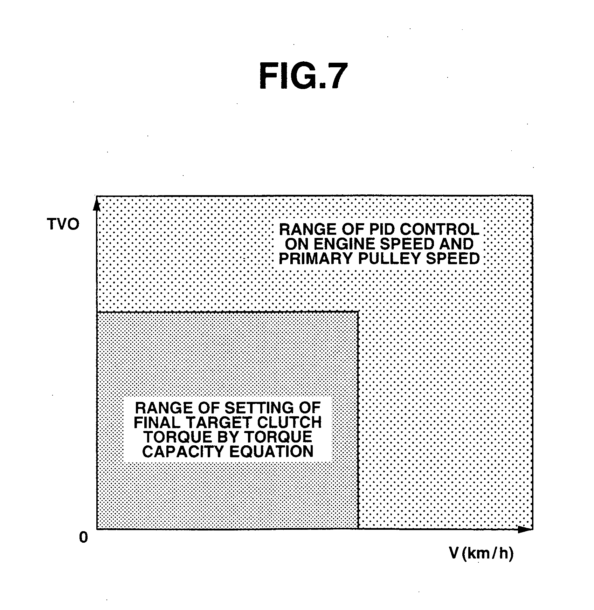

To sum up, the EMSC control unit 10 has two control ranges, as shown in FIG. 7, corresponding to the torque capacity control methods.

In one range, the control operation process goes through steps S101-S106 and S112 successively when the vehicle has started traveling under the condition of TVO ≥ 5/8 or V ≥ 15 km/h. The EMSC control unit 10 regulates the supply of electric current to the EMSC 20 under the PID control in which the gain factors G are adjusted to assign a greater weight to the target engine speed Neo, so that the torque transmission control is more responsive to the rotation of the engine 2. When the vehicle has not started traveling under the condition of TVO ≥ 5/8 or V ≥ 15 km/h, the control operation process goes through steps S101-S105, S111 and S112. The EMSC control unit 10 regulates the supply of electric current to the EMSC 20 under the PID control in which the gain factors G are adjusted to assign a greater weight to the target primary pulley speed Npo, so that the torque transmission control is more responsive to the rotation of the primary pulley of the CVT 3.

In the other range, the control operation process goes through steps S101, S102, S109, S110 and S112 under the condition of TVO < 5/8 and V < 15 km/h. The EMSC control unit 10 thus regulates the supply of electric current to the EMSC 20 so as to control the torque transmission of the EMSC 20 according to the torque capacity equation (1) without PID control.

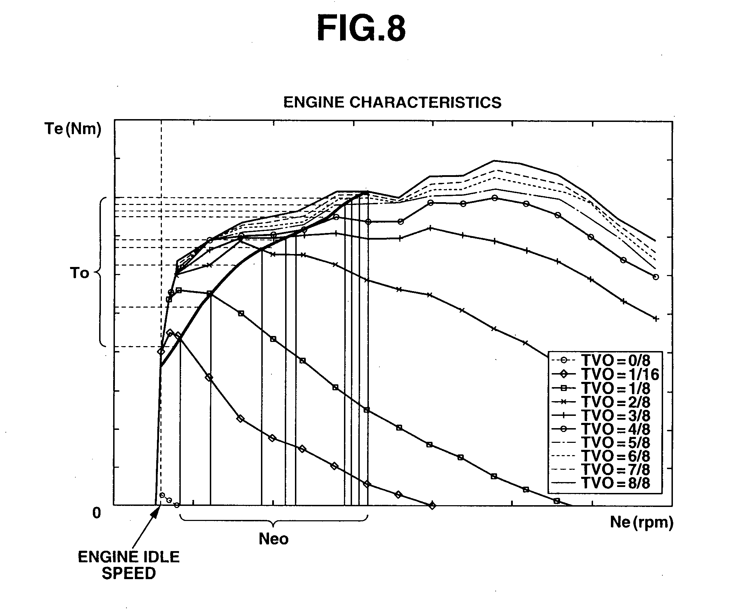

There are the following relationships between the target engine speed Neo and the initial target clutch torque To at various throttle opening values TVO as shown in FIG. 8 according to the present embodiment. In order to maximize engine output torque, the target engine speed To is set to a speed at around which the maximum engine torque can be obtained at each throttle opening value TVO. The initial target clutch torque To is set smaller than the torque given at the target engine speed To in view of losses. The target engine speed and clutch torque characteristics maps of the target engine speed and torque setting sections 13 and 15 are formed on these values, respectively, so that the target engine speed and torque setting sections 13 15 retrieves the target engine speed Neo and clutch torque To from the respective characteristics maps in response to the detection value of the throttle opening TVO.

As described above, the EMSC control unit 10 controls the torque capacity of the EMSC 20 by the torque capacity equation (1) under the small-throttle-opening and low-engine-speed conditions of TVO < 5/8 and V < 15 km/h in the present embodiment.

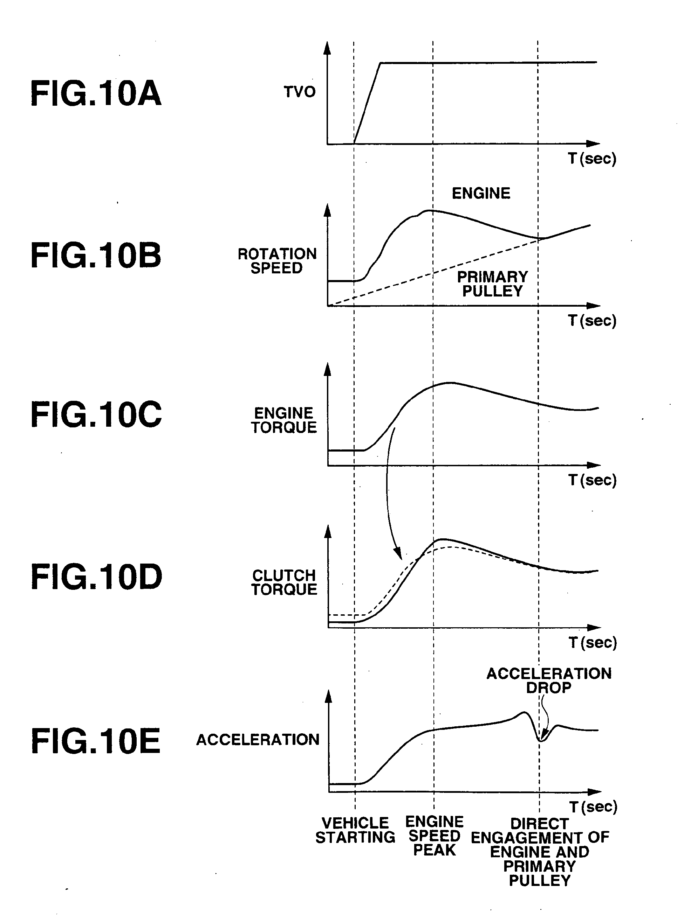

In the earlier technology, the torque capacity of a clutch device is simply expressed by the following equation: $T = A\ Ne^2$. Accordingly, there arises a decrease in engine speed after the engine start, which causes a sharp acceleration drop, at the point of direct engagement of an engine and a CVT (more specifically, a CVT primary pulley) via the clutch device as shown in FIGS. 10A-10E.

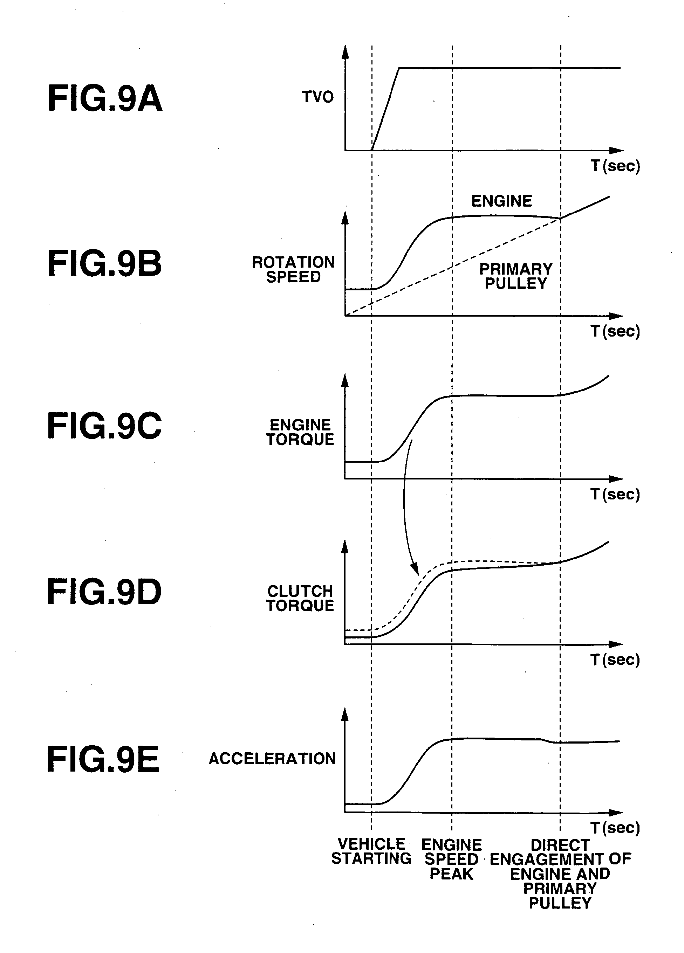

On the other hand, the torque capacity equation (1) is expressed as $T = To \times (Ne/Neo)^{2-V/15}$ so as to consider only the actual engine speed Ne but also the target engine speed Neo and vehicle speed V in controlling the torque capacity in the present embodiment. According to the torque capacity equation (1), the target clutch torque To is initially set with reference to the predetermined target clutch torque characteristics, and then, corrected to give the final target clutch torque T based on the actual engine speed Ne, the target engine speed Neo and the vehicle speed V (i.e. by exponentiating the engine speed ratio Ne/Neo with the weighting function *g(V)* and multiplying the target clutch torque To by the thus-obtained torque correction factor *{f (Ne)}g(V)*). It is thus possible to control the torque capacity properly so as to maintain a good torque balance between drive and driven sides in the torque transmission system at the time of vehicle starting or reacceleration. It is also possible to maximize engine power and attain stable engine running, as shown in FIGS. 9A-9E, without a decrease in engine speed and without a sudden drop in acceleration.

Under the large-throttle-opening or high-engine-speed conditions of TVO ≥ 5/8 or V ≥ 15 km/h, the target clutch torque To is initially set to with reference to the predetermined target clutch torque characteristics, and then, corrected to give the final target clutch torque T through the PID control of the (Ne-Neo) and (Np-Npo) in the present embodiment. The torque transmission can be controlled more stably by changing the torque capacity control method in response to the magnitudes of the throttle opening TVO and the vehicle speed V in this way. Further, the PID control gain factors G are adjusted to assign a greater weight to the target engine speed Neo or the target primary pulley speed Npo depending on the magnitude of the vehicle speed V. The torque transmission can be thus controlled more suitably.

The entire contents of Japanese Patent Application No. 2003-425273 (filed on December 22, 2003) are herein incorporated by reference.

Although the present invention has been described with reference to a specific embodiment of the invention, the invention is not limited to the above-described embodiment. Various modification and variation of the embodiment described above will occur to those skilled in the art in light of the above teaching. The scope of the invention is defined with reference to the following claims.

**Claims**

1. A system for controlling a torque transmission device that transmits an engine torque to a transmission in a vehicle, the system comprising a control unit configured to:

   set a target engine speed according to an engine throttle opening;
   set an initial target transmitting torque according to the engine throttle opening;
   set a final target transmitting torque by the following exponential equation: $T=To\times\{f(Ne)\}^{g(V)}$ where T is the final target transmitting torque; To is the initial target transmitting torque To; Ne is the engine speed; and V is the vehicle speed; and
   generate a signal to control a torque capacity of the torque transmission device in response to the final target transmitting torque.

2. The system of claim 1, wherein *f(Ne)* and *g(V)* are given by the following equations: $f(Ne)=Ne/Neo$; and $g(V)=2-V/15$ where Ne is the actual engine speed; Neo is the target engine speed; and V is the vehicle speed.

3. The system of claim 1, further comprising: a vehicle condition detecting mechanism to detect vehicle conditions including the throttle opening and the vehicle speed, wherein the control unit stores therein characteristics of the target engine speed, target transmission input shaft speed and initial target transmitting torque with respect to the engine throttle opening and is configured to:

set the target engine speed, target transmission input shaft speed and initial target transmitting torque in accordance with the detected throttle opening with reference to the stored characteristics;
set the final target transmitting value by the exponential function upon judging that the detected throttle opening is smaller than a predetermined throttle opening threshold and the detected vehicle speed is lower than a predetermined vehicle speed threshold; and
set the final target transmitting torque in such a manner that the actual engine speed and transmission input shaft speed follow the target engine speed and transmission input shaft speed, respectively, upon judging that the detected throttle opening is larger than or equal to the throttle opening threshold or that the detected vehicle speed is higher than or equal to the vehicle speed threshold.

4. The system of claim 1, wherein the torque transmission device is a clutch.

5. The system of claim 3, wherein the throttle opening threshold is 5/8 taking the full throttle opening as 1, and the vehicle speed threshold is 15 km/h.

6. The system of claim 3, wherein the control unit is configured to perform PID control based on a difference between the actual engine speed and the target engine speed and a difference between the actual transmission input shaft speed and the target transmission input shaft speed to determine a PID control torque, and then, set the final target transmitting torque by the following additive equation:

$$T = To + Tpid$$

where T is the final target transmitting torque; To is the initial target transmitting torque; and Tpid is the PID control torque, at the time when the detected throttle opening is larger than or equal to the throttle opening threshold or when the detected vehicle speed is higher than or equal to the vehicle speed threshold.

7. The system of claim 6, wherein the control unit is configured to adjust gains of the PID control so as to assign a weight to either of the target engine speed and the target transmission input shaft speed depending on the detected vehicle speed.

8. A system for controlling a torque transmission device that transmits an engine torque to a transmission in a vehicle, comprising:

means for detecting an engine throttle opening, an engine speed and a vehicle speed;
means for storing therein target engine speed characteristics and target transmitting torque characteristics;
means for setting a target engine speed in accordance with the detected throttle opening with reference to the target engine speed characteristics;
means for setting a target transmitting torque in accordance with the detected throttle opening with reference to the target transmitting torque characteristics;
means for correcting the target transmitting torque based on the target engine speed, the detected engine speed and the detected vehicle speed; and
means for generating a signal to control a torque capacity of the torque transmission device in response to the corrected target transmitting torque.

9. The system of claim 8, further comprising means for comparing the detected throttle opening and the detected vehicle speed with a predetermined throttle opening threshold and a predetermined vehicle speed threshold, respectively,
said correcting means correcting the target transmitting torque by the following equation: $T = To \times (Ne/Neo)^{2-V/15}$ where To is the target transmitting torque; T is the corrected target transmitting torque; Ne is the actual engine speed; Neo is the target engine speed; and V is the vehicle speed, at the time when the detected throttle opening is smaller than the throttle opening threshold and the detected vehicle speed is lower than the vehicle speed threshold.

10. The system according to Claim 9,
said detecting means further detecting a transmission input shaft speed,
said storing means further storing therein target transmission input shaft speed characteristics,
the system further comprising:

means for setting a target transmission input shaft speed in accordance with the detected throttle opening with reference to the target transmission input shaft speed characteristics;

means for performing PID control based on a difference between the detected engine speed and the target engine speed and a difference between the detected transmission input shaft speed and the target transmission input shaft speed to determine a PID control torque; and means for adjusting gains of the PID control depending on the detected vehicle speed, and said correcting means correcting the target transmitting torque by the following equation: $T = To + Tpid$ where To is the target transmitting torque; T is the corrected target transmitting torque; and Tpid is the PID control torque, at the time when the detected throttle opening is larger than or equal to the throttle opening threshold or when the detected vehicle speed is higher than or equal to the vehicle speed threshold.

11. The system of claim 10, said adjusting means adjusting the PID control gains so as to assign a weight to the target engine speed when the detected vehicle speed is higher than or equal to a vehicle starting speed, and adjusting the PID control gains so as to assign a weight to the target transmission input shaft speed when the detected vehicle speed is lower than the vehicle starting speed.

12. The system of claim 9, wherein the throttle opening threshold is 5/8 taking the full throttle opening as 1, and the vehicle speed threshold is 15 km/h.

13. A process for controlling a torque transmission device that transmits an engine torque to a transmission in a vehicle, comprising:

detecting an engine throttle opening, an engine speed and a vehicle speed; providing target engine speed characteristics and target transmitting torque characteristics; setting a target engine speed in accordance with the detected throttle opening with reference to the target engine speed characteristics; setting a target transmitting torque in accordance with the detected throttle opening with reference to the target transmitting torque characteristics; correcting the target transmitting torque based on the target engine speed, the detected engine speed and the detected vehicle speed; and generating a signal to control a torque capacity of the torque transmission device in response to the corrected target transmitting torque.

14. The process of claim 13, further comprising comparing the detected throttle opening and the detected vehicle speed with a predetermined throttle opening threshold and a predetermined vehicle speed threshold, respectively,

wherein the target transmitting torque is corrected by the following equation: $T = To \times (Ne/Neo)^{2-V/15}$ where To is the target transmitting torque; T is the corrected target transmitting torque; Ne is the actual engine speed; Neo is the target engine speed; and V is the vehicle speed, at the time when the detected throttle opening is smaller than the throttle opening threshold and the detected vehicle speed is lower than the vehicle speed threshold.

15. The process of claim 14, further comprising:

detecting a transmission input shaft speed; providing target transmission input shaft speed characteristics; setting a target transmission input shaft speed in accordance with the detected throttle opening with reference to the target transmission input shaft speed characteristics; performing PID control based on a difference between the detected engine speed and the target engine speed and a difference between the detected transmission input shaft speed and the target transmission input shaft speed to determine a PID control torque; and adjusting gains of the PID control depending on the detected vehicle speed,

wherein the target transmitting torque is corrected by the following equation: $T = To + Tpid$ where To is the target transmitting torque; T is the corrected target transmitting torque; and Tpid is the PID control torque, at the time when the detected throttle opening is larger than or equal to the throttle opening threshold or when the detected vehicle speed is higher than or equal to the vehicle speed threshold.

# FIG.1

TVO

V

EMSC CONTROL UNIT ~10

Ne(rpm)

i

Np(rpm)

~5    ~6    ~7    ~8

THROTTLE ~1 → ENGINE ~2 → EMSC ~20 → CVT ~3 → VEHICLE WHEELS ~4

# FIG.2

EP 1 548 314 A2

# FIG.3

TARGET ENGINE SPEED (Neo) vs THROTTLE OPENING (TVO)

# FIG.4

TARGET CLUTCH TORQUE (To) vs THROTTLE OPENING (TVO)

FIG.5

# FIG.6

START

READ TVO, V, Ne AND Np — S101

(TVO≧5/8 or V≧15km/h)? — S102 — NO

YES

SET Neo AND Npo — S103

PERFORM PID CONTROL BASED ON (Neo-Ne) AND (Npo-Np) — S104

HAS VEHICLE STARTED TRAVELING? — S105 — NO

YES

ADJUST G TO ASSIGN WEIGHT TO Neo — S106

SET Neo — S109

CALCULATE EXPONENT — S108

CALCULATE TORQUE CORRECTION TERM — S110

ADJUST G TO ASSIGN WEIGHT TO Npo — S111

DETERMINE To — S107

DETERMINE T — S112

RETURN

TVO

TVO

V

EP 1 548 314 A2

# FIG.7

TVO

RANGE OF PID CONTROL
ON ENGINE SPEED AND
PRIMARY PULLEY SPEED

RANGE OF SETTING OF
FINAL TARGET CLUTCH
TORQUE BY TORQUE
CAPACITY EQUATION

0

V (km/h)

# FIG.8

ENGINE CHARACTERISTICS

**FIG.9A**

TVO

T (sec)

**FIG.9B**

ROTATION
SPEED

ENGINE

PRIMARY
PULLEY

T (sec)

**FIG.9C**

ENGINE
TORQUE

T (sec)

**FIG.9D**

CLUTCH
TORQUE

T (sec)

**FIG.9E**

ACCELERATION

T (sec)

VEHICLE
STARTING

ENGINE
SPEED
PEAK

DIRECT
ENGAGEMENT OF
ENGINE AND
PRIMARY
PULLEY

16

EP 1 548 314 A2

FIG.10A

TVO

T(sec)

FIG.10B

ROTATION
SPEED

ENGINE

PRIMARY
PULLEY

T(sec)

FIG.10C

ENGINE
TORQUE

T(sec)

FIG.10D

CLUTCH
TORQUE

T(sec)

FIG.10E

ACCELERATION

ACCELERATION
DROP

T(sec)

VEHICLE
STARTING

ENGINE
SPEED
PEAK

DIRECT
ENGAGEMENT OF
ENGINE AND
PRIMARY
PULLEY

17